# EUROPEAN PATENT APPLICATION

(11) **EP 4 186 861 A1**
(43) Date of publication of application: **31.05.2023**
(21) Application number: 22781473.8
(22) Date of filing: 23.03.2022
(51) Int. Cl.: C01B 33/158, C03C 25/20, C03C 25/25, C03C 25/16, G10K 11/162

(54) **METHOD FOR PRODUCING AEROGEL COMPOSITE, AND AEROGEL COMPOSITE**

(30) Priority: 02.04.2021 KR 20210043328
(71) Applicant: Lg Chem, Ltd., Seoul 07336 (KR)
(72) Inventor: KIM, Young Hun, Daejeon 34122 (KR); BAEK, Se Won, Daejeon 34122 (KR); KIM, Mi Ri, Daejeon 34122 (KR)
(74) Representative: Goddar, Heinz J.
(86) International application number: PCT/KR2022/004059
(87) International publication number: WO 2022/211353

(57) **Abstract**

The present invention relates to a method for manufacturing an aerogel composite, wherein the method includes impregnating a catalyzed silica sol into a fiber mat in a volume ratio of 0.1 to 1:1 (catalyzed silica sol:fiber mat) and then performing gelation thereon S10, and an aerogel composite manufactured thereby.

## Description

### TECHNICAL FIELD

### [Cross-reference to Related Applications]

This application claims the benefit of Korean Patent Application No. 10-2021-0043328, filed on April 2, 2021, in the Korean Intellectual Property Office, the disclosure of which is incorporated herein in its entirety by reference.

### [Technical Field]

The present invention relates to a method for manufacturing an aerogel composite which may be used as a sound-absorbing material with an improved sound absorption rate, and an aerogel composite manufactured thereby.

### BACKGROUND ART

The glass fiber mat or a polymer mat, which is mainly used as a sound-absorbing material, is widely used as an insulation material due to excellent insulation and sound-absorbing performance. However, the glass fiber mat or the polymer mat is a mat including a fiber having a diameter of several microns (µm) to several tens of microns (µm) and macro-pores in other spaces, so that there is a limit to improving thermal insulation performance and sound absorption performance other than a method of increasing the thickness of the mat.

Korean Patent Laid-Open Patent Publication No. 10-1391098 discloses a sound-absorbing sheet made of a glass fiber with a cellulose fiber and an organic synthetic fiber as a non-woven fabric to improve the sound absorption performance of a glass fiber mat. However, the sound-absorbing sheet has a large average pore size of about 10 um to about 50 µm, so that it is substantially difficult to achieve improvement in thermal insulation performance, and it is difficult to expect improvement in sound absorption performance for a high frequency range of 2,000 Hz or more, particularly 2,500 Hz or more.

### [Prior Art Document]

### [Patent Document]

(Patent Document 1) KR10-1391098B1

### DISCLOSURE OF THE INVENTION

### TECHNICAL PROBLEM

An aspect of the present invention provides a method for manufacturing an aerogel composite which may be used as a sound-absorbing material due to an improved sound absorption rate, and which may also secure thermal insulation performance, and an aerogel composite manufactured thereby.

### TECHNICAL SOLUTION

According to an aspect of the present invention, there is provided a method for manufacturing an aerogel composite, and an aerogel composite manufactured thereby.
(1) The present invention provides a method for manufacturing an aerogel composite, the method including impregnating a catalyzed silica sol into a fiber mat in a volume ratio of 0.1 to 1:1 (catalyzed silica sol:fiber mat) and then performing gelation thereon S10.
(2) In (1) above, the present invention provides a method for manufacturing an aerogel composite, wherein Step S10 is performed by impregnating a catalyzed silica sol into a fiber mat in a volume ratio of 0.1 to 0.9:1 (catalyzed silica sol:fiber mat) and then performing gelation thereon.
(3) In (1) or (2) above, the present invention provides a method for manufacturing an aerogel composite, wherein the catalyzed silica sol is prepared by including mixing a silica precursor, an organic solvent, and an aqueous solvent to prepare a silica precursor composition S1, mixing an organic solvent, a base catalyst, and a hydrophobizing agent to prepare a catalyst composition S2, and mixing the silica precursor composition and the catalyst composition to prepare a catalyzed silica sol S3.
(4) In (3) above, the present invention provides a method for manufacturing an aerogel composite, wherein the silica precursor composition prepared in Step S1 has a silica concentration of 10 kg/m³ to 100 kg/m³.
(5) In (3) or (4) above, the present invention provides a method for manufacturing an aerogel composite, wherein the silica precursor composition prepared in Step S1 has a silica concentration of 40 kg/m³ to 70 kg/m³.
(6) In any of (1) to (5) above, the present invention provides a method for manufacturing an aerogel composite, the method comprising a step S20 of aging a wet gel composite gelled in Step S10, and a step S30 of drying the wet gel composite aged in Step S20 to obtain an aerogel composite.
(7) In (6) above, the present invention provides a method for manufacturing an aerogel composite, wherein the aerogel composite obtained in Step S30 has pores having a pore diameter of 2 nm to 50 nm.
(8) In any one of (1) to (7) above, the present invention provides a method for manufacturing an aerogel composite, wherein the fiber mat is a glass fiber mat.
(9) In any one of (1) to (8) above, the present invention provides a method for manufacturing an aerogel composite, wherein the fiber mat has pores having a pore diameter of 100 um to 1,000 µm.
(10) The present invention provides an aerogel composite including a fiber mat, and an aerogel formed on the inside and on the surface of the fiber mat, wherein the overall average sound absorption coefficient, which is an average value of sound absorption coefficients per frequency calculated by third-one Octave band datafication of sound absorption rates measured in the frequency range of 50 Hz to 6,400 Hz using Impedance Tube P-S40-20, is 0.41 or greater.
(11) In (10) above, the present invention provides an aerogel composite, wherein the aerogel composite has a high-frequency average sound absorption coefficient of 0.35 or greater, which is an average value of sound absorption coefficients per frequency calculated by third-one Octave band datafication of sound absorption rates measured in the frequency range of 2,500 Hz to 6,400 Hz using Impedance Tube P-S40-20.
(12) In (10) or (11) above, the present invention provides an aerogel composite, wherein the aerogel composite has a room-temperature thermal conductivity of 30.0 mW/mK or less.

### ADVANTAGEOUS EFFECTS

An aerogel composite manufactured by a method for manufacturing an aerogel composite of the present invention has reduced macro-pores and increased meso-pores in a fiber mat, so that there are effects of improving a sound absorption rate as well as thermal insulation performance.

The aerogel composite of the present invention has excellent sound absorption performance and thermal insulation performance, and thus, is useful as a sound-absorbing material.

In addition, the aerogel composite of the present invention has particularly excellent sound absorption performance in a high-frequency range.

### BRIEF DESCRIPTION OF THE DRAWINGS

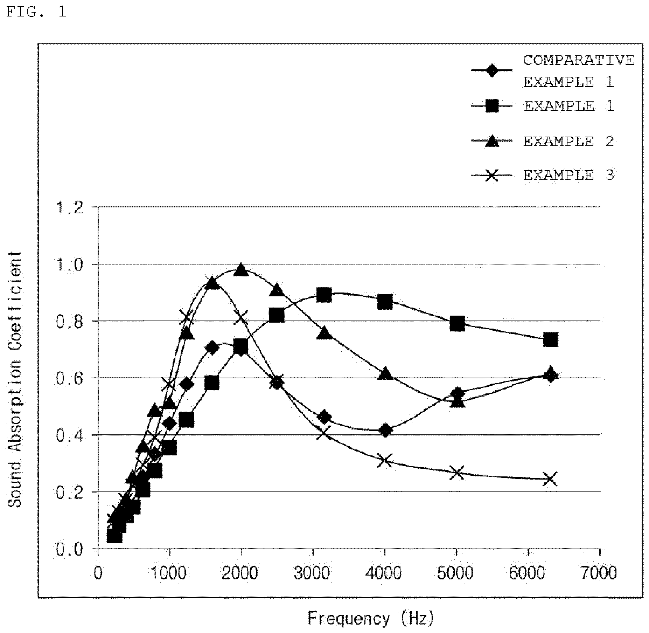

FIG. 1 is a graph illustrating sound absorption coefficients per frequency for aerogel composites manufactured in Examples 1 to 3 and a glass fiber mat of Comparative Example 1, which are calculated by third-one Octave band datafication of sound absorption rates measured in the frequency range of 50 Hz to 6,400 Hz using Impedance Tube P-S40-20.

### MODE FOR CARRYING OUT THE INVENTION

Hereinafter, the present invention will be described in more detail to facilitate understanding of the present invention.

It will be understood that words or terms used in the description and claims of the present invention shall not be construed as being limited to having meanings defined in commonly used dictionaries. It will be further understood that the words or terms should be interpreted as having meanings that are consistent with their meanings in the context of the relevant art and the technical idea of the present invention, based on the principle that an inventor may properly define the meaning of the words or terms to best explain the present invention.

In the present invention, the term 'meso-pore' and 'macro-pore' refer to pores having pore diameters which are distinguished according to IUPAC recommendations, wherein meso-pores refer to pores having a pore diameter of 2 nm to 50 nm, and macro-pores refer to pores having a pore diameter of greater than 50 nm.

The present invention provides a method for manufacturing an aerogel composite. An aerogel composite manufactured by the method for manufacturing an aerogel composite has an improved sound absorption rate, and thus, may be useful as a sound-absorbing material.

According to an embodiment of the present invention, the method for manufacturing an aerogel composite may include impregnating a catalyzed silica sol into a fiber mat in a volume ratio of 0.1 to 1:1 (catalyzed silica sol:fiber mat) and then performing gelation thereon S10.

According to an embodiment of the present invention, Step S10 is a step for forming an aerogel composite, and may be a step for impregnating a catalyzed silica sol into a fiber mat and then performing gelation thereon to form an aerogel on the inside and on the surface of the fiber mat.

According to an embodiment of the present invention, the "impregnation" may be performed by injecting a catalyzed silica sol having fluidity into a fiber mat, at which time the catalyzed silica sol may penetrate into pores inside the fiber mat.

According to an embodiment of the present invention, the `gelation' may be performed by gelation of a catalyzed silica sol impregnated into a fiber mat, and may be performed by leaving a fiber mat impregnated with a catalyzed silica sol to stand. The gelation may be performed simultaneously with the impregnation.

According to an embodiment of the present invention, Step S10 may be performed by introducing a catalyzed silica sol and a fiber mat into a reaction vessel, or may be performed by introducing a catalyzed silica sol onto a fiber mat which is being moved on a conveyor belt according to a roll-to-roll process.

According to an embodiment of the present invention, when Step S10 is performed by introducing a catalyzed silica sol and a fiber mat into a reaction vessel, the order of introducing the catalyzed silica sol and the fiber mat into the reaction vessel is not particularly limited. As a specific example, the impregnation of Step S10 may be performed by any one method among methods of introducing a fiber mat into a reaction vessel and then introducing a catalyzed silica sol thereto, introducing a catalyzed silica sol into a reaction vessel and then introducing a fiber mat thereto, and introducing a fiber mat while introducing a catalyzed silica sol into a reaction vessel. Among the above methods, in terms of inducing more uniform impregnation, the method of introducing a fiber mat and then introducing a catalyzed silica sol thereto may be preferable.

According to an embodiment of the present invention, as described above, Step S10 may be performed by impregnating a catalyzed silica sol into a fiber mat in a volume ratio of 0.1 to 1:1 (catalyzed silica sol:fiber mat) and then performing gelation thereon. As described above, by controlling the volume ratio of a catalyzed silica sol to be impregnated into a fiber mat, due to the formation of an aerogel inside the fiber mat, it is possible to increase meso-pores while reducing macro-pores of the fiber mat, so that there are effects of improving the sound absorption performance of an aerogel composite as well as improving the thermal insulation performance from the aerogel formed on the inside and on the surface of the fiber mat.

According to an embodiment of the present invention, in terms of improving thermal insulation performance compared to a fiber mat by more than a predetermined level, but also in terms of further improving sound absorption performance, particularly in a high-frequency (meaning 2,500 Hz or higher) range, the catalyzed silica sol may be impregnated into a fiber mat in a volume ratio of 0.1 or greater, 0.2 of greater, or 0.3 or greater, or may be impregnated in a volume ratio of 1.0 or less, 0.9 or less, 0.8 or less, or 0.7 or less. As a specific example, Step S10 may be performed by impregnating a catalyzed silica sol into a fiber mat in a volume ratio of 0.1 to 0.9:1, 0.2 to 0.8, or 0.3 to 0.7 (catalyzed silica sol:fiber mat), and then performing gelation thereon, in which case thermal insulation performance compared to a fiber mat may be secured above a predetermined level, and at the same time, sound absorption performance at high frequencies may be further improved.

According to an embodiment of the present invention, the catalyzed silica sol may be prepared by including mixing a silica precursor, an organic solvent, and an aqueous solvent to prepare a silica precursor composition S1, mixing an organic solvent, a base catalyst, and a hydrophobizing agent to prepare a catalyst composition S2, and mixing the silica precursor composition and the catalyst composition to prepare a catalyzed silica sol S3.

According to an embodiment of the present invention, the silica precursor composition prepared in Step S1 may be a silica precursor composition for finally manufacturing a silica aerogel through a gelation reaction of the catalyzed silica sol prepared in Step S3 by mixing with the catalyst composition prepared in Step S2.

According to an embodiment of the present invention, the silica precursor of Step S1 is to allow the aerogel manufactured by gelation by Step S10 to contain silica, and may be one or more selected from the group consisting of tetra methyl ortho silicate (TMOS), tetra ethyl ortho silicate (TEOS), methyl triethyl ortho silicate, dimethyl diethyl ortho silicate, tetra propyl ortho silicate, tetra isopropyl ortho silicate, tetra butyl ortho silicate, tetra secondary butyl ortho silicate, tetra tertiary butyl ortho silicate, tetra hexyl ortho silicate, tetra cyclohexyl ortho silicate, and tetra dodecyl ortho silicate, or may be a pre-hydrolysate of the above compounds. Here, when the pre-hydrolysate is used, it is not necessary to add an acid, and a hydrolysis process of a silica precursor may be shortened or omitted, and a surface modification effect may be promoted. As a specific example, the silica precursor may be pre-hydrolyzed tetraethyl orthosilicate (HTEOS), and the pre-hydrolyzed tetraethylorthosilicate (HTEOS) is a pre-hydrolyzed ethyl polysilicate oligomer having a wide molecular weight distribution, which may be easily applied according to a user's reaction conditions since physical properties such as gelation time may be controlled when synthesized into an oligomer form from tetraethylorthosilicate (TEOS) by varying the degree of pre-hydrolysis (degree of hydration).

According to an embodiment of the present invention, the organic solvent of Step S1 may be an alcohol. The alcohol may be a monohydric alcohol such as methanol, ethanol, isopropanol, and butanol; or a polyhydric alcohol such as glycerol, ethylene glycol, propylene glycol, diethylene glycol, dipropylene glycol, and sorbitol, and any one thereof or a mixture of two or more thereof may be used. Among these, when considering the miscibility thereof with an aqueous solvent and an aerogel, the alcohol may be a monohydric alcohol having 1 to 6 carbon atoms, such as methanol, ethanol, isopropanol, and butanol, and may be ethanol as a specific example.

According to an embodiment of the present invention, the aqueous solvent of Step S1 may be water, and may be distilled water as a specific example.

According to an embodiment present invention, the silica precursor composition prepared in Step S1 may have a silica concentration of 10 kg/m³ to 100 kg/m³. The silica concentration is a concentration of silica included in a silica precursor with respect to a silica precursor composition, and may be controlled from the composition of a silica precursor, an organic solvent, and an aqueous solvent. As a specific example, the silica concentration of the silica precursor composition prepared in Step S1 may be 20 kg/m³ to 80 kg/m3, 30 kg/m³ to 70 kg/m3, 30 kg/m³ to 60 kg/m3, or 35 kg/m³ to 45 kg/m³, and in this range, due to the formation of an aerogel in a fiber mat, it is possible to increase meso-pores while reducing macro-pores of the fiber mat, so that there are effects of improving the sound absorption performance of an aerogel composite as well as improving the thermal insulation performance from the aerogel formed on the inside and on the surface of the fiber mat.

According to an embodiment of the present invention, Step S1 may be performed by mixing the silica precursor, the organic solvent, and the aqueous solvent in a weight ratio of 1:0.1 to 1.5:0.1 to 0.5, 1:0.5 to 1.5:0.1 to 0.4, or 1:0.5 to 1.2:0.1 to 0.3, in order to satisfy the silica concentration of the silica precursor composition prepared by Step S1.

According to an embodiment of the present invention, the catalyst composition prepared in Step S2 may be a catalyst composition for finally manufacturing a silica aerogel by inducing a gelation reaction of the catalyzed silica sol prepared in Step S3 by mixing with the silica precursor composition prepared in Step S1.

According to an embodiment of the present invention, the organic solvent of Step S2 may be an alcohol. The alcohol may be a monohydric alcohol such as methanol, ethanol, isopropanol, and butanol; or a polyhydric alcohol such as glycerol, ethylene glycol, propylene glycol, diethylene glycol, dipropylene glycol, and sorbitol, and any one thereof or a mixture of two or more thereof may be used. Among these, when considering the miscibility thereof with an aqueous solvent and an aerogel, the alcohol may be a monohydric alcohol having 1 to 6 carbon atoms, such as methanol, ethanol, isopropanol, and butanol, and may be ethanol as a specific example.

According to an embodiment of the present invention, the base catalyst of Step S2 may be a base catalyst which may allow the formation of a pH condition to achieve the gelation of the catalyzed silica sol, and the base catalyst may be an inorganic base such as sodium hydroxide and potassium hydroxide, or an organic base such as ammonium hydroxide.

According to an embodiment of the present invention, the organic base may be one or more selected from the group consisting of ammonium hydroxide (NH₄OH), tetramethylammonium hydroxide (TMAH), tetraethyl ammonium hydroxide (TEAH), tetrapropylammonium hydroxide (TPAH), tetrabutylammonium hydroxide (TBAH), methylamine, ethylamine, isopropylamine, monoisopropylamine, diethylamine, diisopropylamine, dibutylamine, trimethylamine,, triethylamine, triisopropylamine, tributylamine, choline, monoethanolamine, diethanolamine, 2-aminoethanol, 2-(ethylamino)ethanol, 2-(methylamino)ethanol, N-methyldiethanolamine, dimethylaminoethanol, diethylaminoethanol, nitrilotriethanol, 2-(2-aminoethoxy)ethanol, 1-amino-2-propanol, triethanolamine, monopropanolamine, or dibutanolamine, and as a specific example, the organic base may be ammonium hydroxide (NH₄OH).

According to an embodiment of the present invention, the hydrophobizing agent of Step S2 may be an alkyl silane compound, and as a specific example, the hydrophobizing agent may be an alkyl silane compound including an alkyl group inducing hydrophobization and a silane functional group capable of reacting with a '-Si-O-' functional group of a wet gel. More specific examples of the hydrophobizing agent may include one or more selected from the group consisting of trimethylethoxysilane (TMES), trimethylsilanol (TMS), trimethylchlorosilane (TMCS), methyltrimethoxysilane (MTMS), methyltriethoxysilane (MTES), dimethyldiethoxysilane (DMDEOS), ethyltriethoxysilane, and phenyltriethoxysilane. As a coprecursor, the alkyl silane compound may participate together in a gelation reaction of the silica precursor, and thus, may hydrophobize a wet gel composite formed by the gelation. That is, the alkyl silane compound may be gelled with the silica precursor during the gelation of Step S10. In addition, the alkyl silane compound trapped in a gel without being gelled may form an alkyl-Si-O-Si networking during the aging, and thus, may hydrophobize the wet gel composite.

According to an embodiment of the present invention, Step S2 may be performed by mixing the organic solvent, the base catalyst, and the hydrophobizing agent in a weight ratio of 1:0.01 to 0.1:0.1 to 0.5, 1:0.02 to 0.08:0.1 to 0.3, or 1:0.04 to 0.06:0.1 to 0.2.

According to an embodiment of the present invention, Step S3 is a step for preparing the catalyzed silica sol to be impregnated and gelled into the fiber mat in Step S10, and may be performed by mixing the silica precursor composition prepared Step S1 and the catalyst composition prepared in Step S2.

According to an embodiment of the present invention, Step S3 may be performed by mixing the silica precursor composition and the catalyst composition in a volume ratio of 1:0.1 to 10.0, 1:0.5 to 5.0, 1:0.7 to 2.0, or 1:0.8 to 1.2.

According to an embodiment of the present invention, an aerogel composite manufactured by the impregnation and gelation of Step S10 may be obtained in the form of a gelled wet gel composite including a solvent. Accordingly, in order to obtain a dried aerogel composite, the method for manufacturing an aerogel composite may further include a step S20 of aging the wet gel composite gelled in Step S10, and a step S30 of drying the wet gel composite aged in Step S20 to obtain an aerogel composite.

According to an embodiment of the present invention, Step S20 is an aging step for allowing a chemical change to be completely achieved by leaving the gelled wet gel composite to stand at an appropriate temperature, and since the network structure formed by the gelation may be formed more firmly, the mechanical stability of the aerogel composite may be improved.

According to an embodiment of the present invention, Step S20 may be performed by leaving the gelled wet gel composite to stand as it is at an appropriate temperature, or as an another example, Step S20 may be performed by adding a solution, in which a base catalyst such as sodium hydroxide (NaOH), potassium hydroxide (KOH), ammonium hydroxide (NH₄OH), triethylamine, pyridine, or the like is diluted to a concentration of 1 to 10% in an organic solvent, in the presence of the wet gel composite. In this case, a Si-O-Si bonding in an aerogel is induced to the maximum to allow the network structure of a silica gel to be firmer, so that there is an effect of facilitating the maintenance of the pore structure in a drying process be performed later. At this time, the organic solvent may be the alcohol described above, and specifically, may include ethanol.

According to an embodiment of the present invention, Step S20 may be performed by leaving the gelled wet gel composite to stand at a temperature of 30°C to 70°C, 40°C to 70°C, or 50°C to 70°C for 1 hour to 30 hours, 10 hours to 30 hours, or 20 hours to 25 hours to strengthen the pore structure, and within this range, it is possible to prevent an increase in manufacturing costs by preventing a loss of the solvent due to evaporation while preventing a decrease in productivity.

According to an embodiment of the present invention, Step S20 may be performed in a separate reaction vessel after recovering the gelled silica wet gel composite, or may be performed inside the reaction vessel in which Step S10 has been performed.

According to an embodiment of the present invention, Step S30 is a step of drying the wet gel composite aged in Step S20 to obtain an aerogel composite so as to obtain a dried aerogel composite, and the drying may be performed by supercritical drying or atmospheric drying in order to remove the solvent while maintaining the pore structure of the aged gel.

According to an embodiment of the present invention, the supercritical drying may be performed using supercritical carbon dioxide. Carbon dioxide (CO₂) is in a gaseous state at room temperature and atmospheric pressure. However, when a temperature and pressure exceed a predetermined temperature and pressure limit called a supercritical point, the evaporation process does not occur so that carbon dioxide becomes to be in a critical state in which gas and liquid cannot be distinguished. Carbon dioxide in a critical state is referred to a supercritical carbon dioxide. The supercritical carbon dioxide has a molecular density close to that of a liquid, however, has a low viscosity, thereby having properties close to those of gas. Therefore, a supercritical carbon dioxide has a high diffusion rate and a high thermal conductivity so that drying efficiency thereof is high, and drying process time may be shortened. The supercritical drying is performed by introducing the aged wet gel into a supercritical drying reactor, filling the reactor with liquid carbon dioxide, and performing a solvent substitution process in which the alcohol solvent in the wet gel is substituted with carbon dioxide. Thereafter, the temperature is raised to 40°C to 80°C, 50°C to 80°C, or 60°C to 80°C at a temperature raising rate of 0.1°C/min to 1°C/min, and then a pressure which is greater than or equal to a pressure at which carbon dioxide becomes supercritical, specifically, the pressure of 100 bar to 150 bar is maintained to remain in the supercritical state of carbon dioxide (CO₂) for a predetermined period of time, specifically for 20 minutes to 1 hour. In general, carbon dioxide becomes supercritical at a temperature of 31°C and a pressure of 73.8 bar. After carbon dioxide is maintained at a predetermined temperature and a predetermined pressure to remain in a supercritical state for 2 hours to 12 hours, more specifically, 2 hours to 6 hours, the pressure is generally lowered to complete the supercritical drying process to obtain an aerogel composite. At this time, a solvent such as the organic solvent removed from the wet gel composite through the supercritical drying may be separately recovered through a separator connected to the supercritical drying reactor.

According to an embodiment of the present invention, the atmospheric drying may be performed by a common method such as hot air drying, infrared (IR) drying, or the like under a temperature of 70°C to 200°C and atmospheric pressure (1±0.3 atm) .

According to an embodiment of the present invention, the aerogel composite obtained in Step S30 may include pores having a pore diameter of 2 nm to 50 nm, and as a specific example, the volume ratio of pores having a pore diameter of 2 nm to 50 nm may be greater than that of pores having a pore diameter of 100 um to 1,000 µm, and due to the formation of an aerogel inside a fiber mat thereby, it is possible to increase meso-pores while reducing macro-pores of the fiber mat, so that there are effects of improving the sound absorption performance of an aerogel composite as well as improving the thermal insulation performance from the aerogel formed on the inside and on the surface of the fiber mat.

According to an embodiment of the present invention, the fiber mat may be a glass fiber mat which may be used as a sound-absorbing material, and as a specific example, the fiber mat may be a fiber mat formed of fibers or glass fibers having a diameter of greater than 1 um or a diameter of 1 um to 100 µm, and in addition, the fiber mat may include pores between the fibers or glass fibers, the pores having a pore diameter of greater than 50 nm, specifically, a pore diameter of 100 um to 1,000 µm, that is, macro-pores.

According to the method for manufacturing an aerogel composite of the present invention, by forming an aerogel composite for a fiber mat which may be used as a sound-absorbing material by itself, specifically, a glass fiber mat, it is possible to increase meso-pores while reducing macro-pores of the fiber mat, so that sound absorption performance and thermal insulation performance may be simultaneously improved.

The present invention provides an aerogel composite. The aerogel composite may be manufactured by the method for manufacturing an aerogel composite, and accordingly, the aerogel composite has an improved sound absorption rate, and thus, may be useful as a sound-absorbing material.

According to an embodiment of the present invention, the aerogel composite includes a fiber mat, and an aerogel formed on the inside and on the surface of the fiber mat, wherein the overall average sound absorption coefficient, which is an average value of sound absorption coefficients per frequency calculated by third-one Octave band datafication of sound absorption rates measured in the frequency range of 50 Hz to 6,400 Hz using Impedance Tube P-S40-20, may be 0.41 or greater.

According to an embodiment of the present invention, the fiber mat may be the same as the fiber mat described in the method for manufacturing an aerogel composite, and the aerogel may be an aerogel formed in accordance with the method for manufacturing an aerogel composite.

According to an embodiment of the present invention, the aerogel composite may include a fiber mat component which includes pores having a pore diameter of 100 um to 1,000 um and formed of fibers or glass fibers having a diameter of greater than 1 um, or a diameter of 1 um to 100 um and derived from the fiber mat, and macro-pores in the fiber mat, as a specific example, pores having a pore diameter of 2 nm to 50 nm in which an aerogel is formed in pores having a pore diameter of 100 um to 1,000 um to become meso-pores. As described above, when the aerogel is formed in the fiber mat, thereby reducing macro-pores while increasing meso-pores, the average diameter of all the pores in the fiber mat may be decreased to improve the sound absorption performance, and in addition, due to the aerogel formed in the fiber mat, thermal insulation performance may also be improved.

According to an embodiment of the present invention, the aerogel composite may include pores having a pore diameter of greater than 50 nm and derived from a fiber mat, as a specific example, pores having a pore diameter of 100 um to 1,000 µm, that is, some macro-pores. However, even in this case, a volume ratio of pores having a pore diameter of 2 nm to 50 nm, that is, meso-pores in the aerogel composite may be larger than that of pores having a pore diameter of greater than 50 nm, that is, macro-pores, and due to the formation of an aerogel inside a fiber mat thereby, it is possible to increase meso-pores while reducing macro-pores of the fiber mat, so that there are effects of improving the sound absorption performance of an aerogel composite as well as improving the insulation performance from the aerogel formed on the inside and on the surface of the fiber mat.

According to an embodiment of the present invention, the aerogel composite has an overall average sound absorption coefficient of 0.41 or greater, 0.41 to 0.60, or 0.43 to 0.54, which is an average value of sound absorption coefficients per frequency calculated by third-one Octave band datafication of sound absorption rates measured in the frequency range of 50 Hz to 6,400 Hz using Impedance Tube P-S40-20, and when the overall average sound absorption coefficient is within this range, it can be considered that the sound absorption performance is excellent.

According to an embodiment of the present invention, the aerogel composite may have a sound absorption coefficient of 0.50 or greater, 0.51 or greater, or 0.59 or greater, and also 1.00 or less, 0.95 or less, or 0.91 or less, which is calculated by third-one Octave band datafication of a sound absorption rate measured at the frequency of 2,500 Hz using the Impedance Tube P-S40-20. In addition, in terms of securing sound absorption performance in a high-frequency range, the aerogel composite may have a sound absorption coefficient of 0.60 or greater, 0.65 or greater, 0.70 or greater, 0.71 or greater, or 0.82 or greater at the frequency of 2,500 Hz.

According to an embodiment of the present invention, the aerogel composite may have a sound absorption coefficient of 0.35 or greater, 0.39 or greater, or 0.41 or greater, and also 1.00 or less, 0.95 or less, 0.90 or less, or 0.89 or less, which is calculated by third-one Octave band datafication of a sound absorption rate measured at the frequency of 3,150 Hz using the Impedance Tube P-S40-20. In addition, in terms of securing sound absorption performance in a high-frequency range, the aerogel composite may have a sound absorption coefficient of 0.47 or greater, 0.52 or greater, 0.60 or greater, 0.70 or greater, or 0.77 or greater at the frequency of 3,150 Hz.

According to an embodiment of the present invention, the aerogel composite may have a sound absorption coefficient of 0.28 or greater, 0.31 or greater, or 0.36 or greater, and also 1.00 or less, 0.95 or less, 0.90 or less, or 0.87 or less, which is calculated by third-one Octave band datafication of a sound absorption rate measured at the frequency of 4,000 Hz using the Impedance Tube P-S40-20. In addition, in terms of securing sound absorption performance in a high-frequency range, the aerogel composite may have a sound absorption coefficient of 0.37 or greater, 0.40 or greater, 0.50 or greater, 0.60 or greater, or 0.61 or greater at the frequency of 4,000 Hz.

According to an embodiment of the present invention, the aerogel composite may have a sound absorption coefficient of 0.25 or greater, 0.27 or greater, or 0.35 or greater, and also 1.00 or less, 0.90 or less, 0.80 or less, or 0.79 or less, which is calculated by third-one Octave band datafication of a sound absorption rate measured at the frequency of 5,000 Hz using the Impedance Tube P-S40-20. In addition, in terms of securing sound absorption performance in a high-frequency range, the aerogel composite may have a sound absorption coefficient of 0.52 or greater, 0.53 or greater, 0.60 or greater, 0.67 or greater, or 0.69 or greater at the frequency of 5,000 Hz.

According to an embodiment of the present invention, the aerogel composite may have a sound absorption coefficient of 0.25 or greater, 0.35 or greater, or 0.36 or greater, and also 1.00 or less, 0.90 or less, 0.80 or less, or 0.74 or less, which is calculated by third-one Octave band datafication of a sound absorption rate measured at the frequency of 6,300 Hz using the Impedance Tube P-S40-20. In addition, in terms of securing sound absorption performance in a high-frequency range, the aerogel composite may have a sound absorption coefficient of 0.43 or greater, 0.50 or greater, 0.60 or greater, 0.62 or greater, or 0.68 or greater at the frequency of 6,300 Hz.

According to an embodiment of the present invention, the aerogel composite may have a high-frequency average sound absorption coefficient of 0.35 or greater, 0.44 or greater, or 0.48 or greater, and also, 1.00 or less, 0.95 or less, 0.90 or less, 0.85 or less, or 0.82 or less, which is an average value of sound absorption coefficients per frequency calculated by third-one Octave band datafication of a sound absorption rate measured in the frequency range of 2,500 Hz to 6,400 Hz using the Impedance Tube P-S40-20. In addition, in terms of securing sound absorption performance in a high-frequency range, the aerogel composite may have a high-frequency average sound absorption coefficient of 0.53 or greater, 0.60 or greater, 0.65 or greater, or 0.69 or greater.

According to an embodiment of the present invention, the aerogel composite is not only excellent in sound absorption performance but also in thermal insulation performance, and may have a room-temperature thermal conductivity of 30.0 mW/mK or less, 1.0 mW/mK to 30.0 mW/mK, 10.0 mW/mK to 29.0 mW/mK, or 18.3 mW/mK to 28.8 mW/mK. When the room-temperature thermal conductivity is within this range, it can be considered that the thermal insulation performance is sufficiently secured.

Hereinafter, embodiments of the present invention will be described in detail so that those skilled in the art may easily carry out the present invention. However, the present invention may be embodied in many different forms, and is not limited to the embodiments set forth herein.

### Examples

### Example 1

Pre-hydrolyzed TEOS (silica content: 20 wt%, HTEOS), ethanol and distilled water were added to a reactor and then mixed in a weight ratio of 1:0.9:0.22 to prepare a silica precursor composition. At this time, the concentration of silica in the silica precursor composition was 40 kg/m³. At the same time, ethanol, ammonia water (concentration: 30 wt%) trimethylethoxysilane (TMES) were added to another reactor and then mixed in a weight ratio of 1:0.054:0.154 to prepare a catalyst composition. The silica precursor composition and the catalyst composition prepared above were mixed in a volume ratio of 1:1 to prepare a catalyzed silica sol.

Thereafter, a glass fiber mat (Hyundai Fiber Co., Ltd.) which includes pores having a pore diameter of 100 um to 1,000 um was introduced into a reaction vessel, and the catalyzed silica sol was impregnated in a volume ratio of 0.3:1 with respect to the volume of the glass fiber mat (catalyzed silica sol:glass fiber mat), followed by performing gelation thereon 10 minutes later to prepare a wet gel composite. Thereafter, the gelled wet gel composite was left to stand in a chamber of 70°C for 24 hours to be aged. The aged wet gel composite was placed in a supercritical extractor of 7.2 L and then carbon dioxide (CO₂) was injected thereto. Thereafter, the temperature inside the extractor was raised to 75°C, and when 75°C and 150 bar were reached, a cycle of injecting and venting CO₂ at a rate of 0.5 L/min for 20 minutes and then maintaining the state in which the CO₂ injection is stopped for 20 minutes was repeated for 4 times. At the time of injecting and venting carbon dioxide, ethanol was recovered through a lower end of the extractor. Thereafter, over the course of 2 hours, carbon dioxide was vented. After the supercritical drying was completed, a dried aerogel composite was obtained.

### Example 2

The same was performed in the same manner as in Example 1 except that in Example 1 above, the catalyzed silica sol was impregnated in a volume ratio of 0.7:1 with respect to the volume of the glass fiber mat (catalyzed silica sol:glass fiber mat), followed by performing gelation thereon 10 minutes later to prepare a wet gel composite.

### Example 3

The same was performed in the same manner as in Example 1 except that in Example 1 above, the catalyzed silica sol was impregnated in a volume ratio of 1:1 with respect to the volume of the glass fiber mat (catalyzed silica sol:glass fiber mat), followed by performing gelation thereon 10 minutes later to prepare a wet gel composite.

### Example 4

The same was performed in the same manner as in Example 1 except that in Example 1 above, when preparing a silica precursor composition, the silica precursor composition was prepared by adjusting the weight ratio of pre-hydrolyzed TEOS (silica content: 20 wt%, HTEOS), ethanol, and distilled water such that the concentration of silica in the silica precursor composition would be 50 kg/m³.

### Example 5

The same was performed in the same manner as in Example 4 except that in Example 4 above, the catalyzed silica sol was impregnated in a volume ratio of 0.7:1 with respect to the volume of the glass fiber mat (catalyzed silica sol:glass fiber mat), followed by performing gelation thereon 10 minutes later to prepare a wet gel composite.

### Example 6

The same was performed in the same manner as in Example 4 except that in Example 4 above, the catalyzed silica sol was impregnated in a volume ratio of 1:1 with respect to the volume of the glass fiber mat (catalyzed silica sol:glass fiber mat), followed by performing gelation thereon 10 minutes later to prepare a wet gel composite.

### Example 7

The same was performed in the same manner as in Example 1 except that in Example 1 above, when preparing a silica precursor composition, the silica precursor composition was prepared by adjusting the weight ratio of pre-hydrolyzed TEOS (silica content: 20 wt%, HTEOS), ethanol, and distilled water such that the concentration of silica in the silica precursor composition would be 70 kg/m³.

### Example 8

The same was performed in the same manner as in Example 7 except that in Example 7 above, the catalyzed silica sol was impregnated in a volume ratio of 0.7:1 with respect to the volume of the glass fiber mat (catalyzed silica sol:glass fiber mat), followed by performing gelation thereon 10 minutes later to prepare a wet gel composite.

### Example 9

The same was performed in the same manner as in Example 7 except that in Example 7 above, the catalyzed silica sol was impregnated in a volume ratio of 1:1 with respect to the volume of the glass fiber mat (catalyzed silica sol:glass fiber mat), followed by performing gelation thereon 10 minutes later to prepare a wet gel composite.

### Comparative Example 1

A glass fiber mat (Hyundai Fiber Co., Ltd.) which includes pores having a pore diameter of 100 um to 1,000 um was used as it was.

### Experimental Examples

For the aerogel composites prepared in Examples 1 to 9 or the glass fiber mat prepared in Comparative Example 1, the sound absorption coefficient per frequency, the average sound absorption coefficient, and the room-temperature thermal conductivity were measured and shown in Table 1 below.

* Sound absorption coefficient per frequency and average sound absorption coefficient: Each of the aerogel composites was cut to 30 cm X 30 cm to prepare a specimen, and the sound absorption rate measured in the frequency range of 50 Hz to 6,400 Hz using Bruel & Kjaer Corporation's Impedance Tube P-S40-20 was subjected to third-one Octave band datafication to calculate a sound absorption coefficient per frequency. From the sound absorption coefficient per frequency, an overall average sound absorption coefficient for an overall average value and a high-frequency average sound absorption coefficient for the average value in a high-frequency range (2,500 Hz to 6,300 Hz) were respectively calculated.

In addition, for the aerogel composites prepared in Examples 1 to 3 and the glass fiber mat of Comparative Example 1, the calculated sound absorption coefficients per frequency are illustrated in a graph and shown in FIG. 1.

* Room temperature (23±5°C) thermal conductivity (mW/mK): each of the aerogel composites or the glass fiber mat was cut to 30 cm X 30 cm to prepare a specimen, and using the HFM 436 Lambda equipment of NETZSCH Co., Ltd, the room-temperature (23±5°C) thermal conductivity was measured.

**[Table 1]**

| Classificatio ns | | Examples | | | | | | | | | Comparative Examples |
|---|---|---|---|---|---|---|---|---|---|---|---|
| | | 1 | 2 | 3 | 4 | 5 | 6 | 7 | 8 | 9 | 1 |
| Overall average sound absorption coefficient | | 0.45 | 0.54 | 0.43 | 0.49 | 0.46 | 0.46 | 0.50 | 0.47 | 0.50 | 0.40 |
| High-freque ncy sound absorp tion coeffi cient | 2,500 Hz | 0.82 | 0.91 | 0.59 | 0.90 | 0.71 | 0.50 | 0.91 | 0.65 | 0.51 | 0.58 |
| | 3,150 Hz | 0.89 | 0.77 | 0.41 | 0.89 | 0.52 | 0.35 | 0.88 | 0.47 | 0.39 | 0.46 |
| | 4,000 Hz | 0.87 | 0.61 | 0.31 | 0.79 | 0.40 | 0.28 | 0.77 | 0.37 | 0.36 | 0.42 |
| | 5,000 Hz | 0.79 | 0.52 | 0.27 | 0.69 | 0.35 | 0.25 | 0.67 | 0.32 | 0.53 | 0.55 |
| | 6, 300 Hz | 0.74 | 0.62 | 0.25 | 0.68 | 0.43 | 0.35 | 0.71 | 0.43 | 0.36 | 0.61 |
| | High-frequ ency avera ge | 0.82 | 0.69 | 0.36 | 0.79 | 0.48 | 0.35 | 0.79 | 0.44 | 0.43 | 0.52 |
| Room temperature thermal conductivity (mW/mK) | | 28.2 | 19.3 | 18.3 | 27.5 | 20.2 | 18.5 | 28.8 | 20.3 | 19.5 | 32.2 |

As shown in Table 1 and FIG. 1 above, it can be seen that each of the aerogel composites of Examples 1 to 9 prepared according to the present invention has a higher overall average sound absorption coefficient than that of the glass fiber mat of Comparative Example 1, thereby having improved sound absorption performance, and has a low room-temperature thermal conductivity, thereby having excellent thermal insulation performance.

Particularly, it can be seen that Examples 1, 2, 4, 5, 7, and 8 which were manufactured by impregnating the catalyzed silica sol into the fiber mat in a volume ratio of 0.3:1 to 0.7:1 (catalyzed silica sol:fiber mat), followed by gelation when manufacturing an aerogel composite secured sufficient thermal insulation performance compared to Comparative Example 1, and had a further improved sound absorption coefficient per frequency and a further improved high-frequency average sound absorption coefficient in a high-frequency range compared to Examples 3, 6, and 9 which were manufactured by impregnating the catalyzed silica sol into the fiber mat in a volume ratio of 1:1 (catalyzed silica sol:fiber mat), followed by gelation while having the same concentration of silica as in each Example.

From the results, it can be confirmed that when an aerogel composite is manufactured according to the method for manufacturing an aerogel composite of the present invention, macro-pores of a fiber mat are reduced and meso-pores thereof are increased, so that a sound absorption rate is improved as well as thermal insulation performance, and accordingly the aerogel composite of the present invention has excellent sound absorption performance and thermal insulation performance, and thus, is useful as a sound-absorbing material.

## Claims

1. A method for manufacturing an aerogel composite comprising impregnating a catalyzed silica sol into a fiber mat in a volume ratio of 0.1 to 1:1 (catalyzed silica sol:fiber mat) and then performing gelation thereon S10.

2. The method of claim 1, wherein Step S10 is performed by impregnating a catalyzed silica sol into a fiber mat in a volume ratio of 0.1 to 0.9:1 (catalyzed silica sol:fiber mat) and then performing gelation thereon.

3. The method of claim 1, wherein the catalyzed silica sol is prepared by comprising:
mixing a silica precursor, an organic solvent, and an aqueous solvent to prepare a silica precursor composition S1;
mixing an organic solvent, a base catalyst, and a hydrophobizing agent to prepare a catalyst composition S2; and
mixing the silica precursor composition and the catalyst composition to prepare a catalyzed silica sol S3.

4. The method of claim 3, wherein the silica precursor composition prepared in Step S1 has a silica concentration of 10 kg/m³ to 100 kg/m³.

5. The method of claim 3, wherein the silica precursor composition prepared in Step S1 has a silica concentration of 40 kg/m³ to 70 kg/m³.

6. The method of claim 1, wherein the method for manufacturing an aerogel composite comprising:
a step S20 of aging a wet gel composite gelled in Step S10; and
a step S30 of drying the wet gel composite aged in Step S20 to obtain an aerogel composite.

7. The method of claim 6, wherein the aerogel composite obtained in Step S30 has pores having a pore diameter of 2 nm to 50 nm.

8. The method of claim 1, wherein the fiber mat is a glass fiber mat.

9. The method of claim 1, wherein the fiber mat has pores having a pore diameter of 100 um to 1,000 µm.

10. An aerogel composite comprising:
a fiber mat; and an aerogel formed on the inside and on the surface of the fiber mat, wherein the overall average sound absorption coefficient, which is an average value of sound absorption coefficients per frequency calculated by third-one Octave band datafication of sound absorption rates measured in the frequency range of 50 Hz to 6,400 Hz using Impedance Tube P-S40-20, is 0.41 or greater.

11. The aerogel composite of claim 10, wherein the aerogel composite has a high-frequency average sound absorption coefficient of 0.35 or greater, which is an average value of sound absorption coefficients per frequency calculated by third-one Octave band datafication of sound absorption rates measured in the frequency range of 2,500 Hz to 6,400 Hz using Impedance Tube P-S40-20.

12. The aerogel composite of claim 10, wherein the aerogel composite has a room-temperature thermal conductivity of 30.0 mW/mK or less.
